(19) Europäisches Patentamt
European Patent Office
Office européen des brevets

(11) EP 1 842 662 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**08.01.2014 Patentblatt 2014/02**

(45) Hinweis auf die Patenterteilung:
**10.08.2011 Patentblatt 2011/32**

(21) Anmeldenummer: **07006482.9**

(22) Anmeldetag: **29.03.2007**

(51) Int Cl.:
***B32B 27/18*** (2006.01) ***B32B 27/36*** (2006.01)
***C08K 5/1515*** (2006.01) *H01B 7/00* (2006.01)
*H01G 4/00* (2006.01) *H01L 31/00* (2006.01)
*H01R 9/00* (2006.01)

(54) **Hydrolysebeständige, mehrschichtige Polyesterfolie mit Hydrolyseschutzmittel**

Multilayer polyester film containing a hydrolysis stabilizer

Film en polyester multicouche contenant un stabilisateur d'hydrolyse

(84) Benannte Vertragsstaaten:
**DE FR GB IT LU TR**

(30) Priorität: **06.04.2006 DE 102006016156**

(43) Veröffentlichungstag der Anmeldung:
**10.10.2007 Patentblatt 2007/41**

(73) Patentinhaber: **Mitsubishi Polyester Film GmbH**
**65203 Wiesbaden (DE)**

(72) Erfinder:
- **Kliesch, Holger, Dr.**
  **65462 Ginsheim-Gustavsburg (DE)**
- **Jesberger, Martin, Dr.**
  **55122 Mainz (DE)**
- **Kuhmann, Bodo**
  **65594 Runkel (DE)**
- **Fischer, Ingo**
  **65558 Heistenbach (DE)**
- **Klein, Dagmar, Dr.**
  **55437 Ockenheim (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 1 634 914** **EP-A1- 1 634 914**
**EP-A1- 1 634 915** **EP-A2- 0 338 434**
**EP-A2- 0 389 948** **WO-A1-2004/069912**
**DE-A1- 10 048 721** **DE-A1- 10 349 168**
**US-A1- 2002 065 346**

- **CIMECIOGLU ET AL.: 'Properties of Oligomers Present in Poly(ethylene Terephthalate)' JOURNAL OF APPLIED POLYMER SCIENCE vol. 32, 1986, pages 4719 - 4733**
- **DIPL.-ING. CHEM. REMY HUMBRECHT EMMENBRUCKE 6TH JOINT MEETING OF THE AACHEN TEXTILE INSTITUTES 27 September 1979 - 28 September 1979,**
- **EARHART N.J.: 'Stablization Strategies of Hot Melt Adhesives' HOT MELT SYMPOSIUM PROCEEDINGS 1998,**

EP 1 842 662 B2

## Beschreibung

Die Erfindung betrifft eine hydrolysebeständige Polyesterfolie, deren Dicke bevorzugt im Bereich von 0,4 bis 500 μm liegt. Die Folie enthält mindestens ein Hydrolyseschutzmittel und zeichnet sich durch ihre geringe Hydrolysegeschwindigkeit aus. Die Folie ist mindestens zweischichtig. Die Erfindung betrifft ferner ein Verfahren zur Herstellung der Folie sowie ihre Verwendung.

Folien aus Polyestern im angegebenen Dickenbereich sind hinreichend bekannt. Nachteilig an solchen Polyesterfolien ist jedoch ihre Hydrolyseneigung, insbesondere bei Temperaturen oberhalb der Glastemperatur des jeweiligen Polyesters. Unter Hydrolyseneigung wird hierbei die Eigenschaft des Polyesters verstanden, unter feuchten Bedingungen hydrolytisch abzubauen, welches beispielsweise an einer Reduzierung des IV- bzw. SV-Wertes (Viskosität) erkennbar ist. Dies ist insbesondere bei Anwendungen mit höherer Temperaturbeanspruchung wie in Folienkondensatoren, Kabelummantelungen, Flachbandkabeln, Motorschutzfolien, aber auch in Langzeitanwendungen wie in Verglasungen und Außenanwendungen ein limitierender Faktor für den Einsatz von Polyesterfolien.

Besonders ausgeprägt ist die Hydrolyseneigung bei aliphatischen Polyestern, aber auch bei aromatischen Polyestern wie PBT und PET. Wenn die Hydrolyseneigung von PET zu groß für die Anwendung wird, muss man auf das noch etwas hydrolysestabilere PEN zurückgreifen oder sogar auf andere Polymere wie z. B. Polyetherimide oder Polyimide. Diese sind jedoch deutlich teurer als PET und deshalb häufig aus wirtschaftlichen Gründen keine geeignete Lösung.

Es wurde deshalb bereits vorgeschlagen, die Hydrolysestabilität von Polyesterfolien durch die Einarbeitung von Hydrolysestabilisatoren zu verbessern.

Hydrolysebeständigere Polyesterrohstoffe, die durch Verwendung von Carbodiimiden erhalten werden, sowie daraus hergestellte Fasern und Folien sind bekannt (US-A-5,885,709, EP-A-0 838 500, CH-A-621 135). Folien, die aus solchen Rohstoffen hergestellt werden, neigen jedoch sowohl bei der Herstellung als auch bei der späteren Verwendung zu Ausgasungen von Isocyanaten und anderen schleimhautreizenden, bzw. gesundheitsschädlichen Neben- und Abbauprodukten. Dies ist bei flächigen Gebilden wie Folien mit großer Oberfläche ein weit größeres Problem als bei Spritzgussteilen oder ähnlichen.

Hydrolysestabilisatoren, welche Epoxygruppen aufweisen, führen ebenfalls zu einer Hydrolysestabilisierung und sind beispielsweise in der EP-A-0 292 251 A2 oder US-A-3,657,191 beschrieben. Diese Verbindungen basieren jedoch auf der Erzeugung von Oxiranringen mittels Epichlorhydrin und neigen u. a. aufgrund ihrer endständigen Epoxygruppen bei Erhitzung zum Abspalten niedermolekularer toxischer Verbindungen, so dass ähnliche Probleme wie bei der Verwendung von Carbodiimiden mit dem Einsatz dieser Substanzen verbunden sind. Außerdem ist ihre Einbindung in die Polyestermatrix ungenügend, was zu langen Reaktionszeiten und bei verstreckten Polyesterfolien zu einer hohen, unerwünschten Trübung führt.

Außerdem haben bekannte Hydrolysestabilisatoren wie Carbodiimide und andere Substanzen wie die in der EP-A-0 292 251 beschriebenen den Nachteil, dass sie teilweise zu starken Molekulargewichtszunahmen (Viskositätsanstieg) im Polymer während der Extrusion führen und so den Extrusionsprozess instabil und schwer beherrschbar machen.

In der DE 103 49 168 A1 werden Mischungen aus epoxidierten Fettsäurealkylestern und epoxidierten Fettsäureglyceriden als Hydrolysestabilisatoren u. a. für Industrieöle, Pflanzenester, Polyurethane und Polyester beschrieben, die in ihrer bevorzugten Ausführungsform als dritte Mischungskomponente bis zu 30 Gew.-% eines Carbodiimids enthalten. Es fehlen Hinweise auf eine geeignete Einarbeitung solcher Hydrolysestabilisatoren in eine Polyesterfolie. Die Verwendung dieser Additive insbesondere in den Außenlagen (bei einschichtiger Folie ist diese Lage die Außenlage) der Folie, führt jedoch zu einer Verschlechterung der Metallisierbarkeit/Bedruckbarkeit, und es kann zu Geruchsbelästigungen durch Ausdampfen des Stabilisators kommen.

Aufgabe der vorliegenden Erfindung war es, einen hydrolysebeständigen Polyesterrohstoff und daraus hergestellte Folien zur Verfügung zu stellen, welche die beschriebenen Nachteile des Standes der Technik vermeiden.

Diese Aufgabe wird gelöst durch eine Polyesterfolie, welche neben Polyester bevorzugt 0,1 - 20 Gew.-% (bezogen auf das Gewicht der fertigen Folie) eines Hydrolysestabilisators auf Basis von epoxidierten Fettsäurealkylestern und/oder epoxidierten Fettsäureglyceriden enthält.

Die Folie ist dabei mindestens zweischichtig und weist mindestens eine Außenschicht auf, die die oben genannten Hydrolysestabilisatoren nicht enthält.

Die Folie enthält als Hauptbestandteil einen Polyester. Geeignete Polyester sind beispielsweise Polyethylenterephthalat (PET), Polyethylennaphthalat (PEN), Polybutylenterephthalat (PBT), Polytrimethylenterephthalat (PTT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus,
wobei PET, PBT, PEN und PTT sowie deren Mischungen und Co-Polyester bevorzugt sind.

Zur Herstellung der Polyester können neben den Hauptmonomeren wie Dimethylterephthalat (DMT), Ethylenglycol (EG), Propylenglycol (PG), 1 ,4-Butandiol, Terephthalsäure (TA), Benzoldicarbonsäure und/oder 2,6-Naphthalindicarbonsäure (NDA) auch z. B. Isophthalsäure (IPA), trans- und/oder cis-1,4-Cyclohexandimethanol (c-CHDM, t-CHDM oder c/t-CHDM) und andere geeignete Dicarbonsäurekomponenten (oder Dicarbonsäureester) und Diolkomponenten verwendet werden. Entsprechende Copolyester sind von der vorliegenden Erfindung mit umfasst.

Bevorzugt sind Polymere, bei denen die Dicarbonsäurekomponente zu 90 Gew.-% (bezogen auf die Gesamtmenge der Dicarbonsäurekomponente) und mehr, insbesondere zu 95 Gew.-% und mehr, aus TA besteht. Bevorzugt sind weiterhin Thermoplaste, bei denen die Diolkomponente zu 90 Gew.-% und mehr, insbesondere zu 93 Gew.-% (bezogen auf die Gesamtmenge der Diole) und mehr, aus EG besteht. Bevorzugt sind auch Polymere, bei denen der Diethylenglycolanteil am Gesamtpolymer im Bereich von 0,5 bis 2 Gew.-% liegt. Bei allen in diesem Absatz genannten Mengenangaben bleibt das Hydrolyseschutzmittel unberücksichtigt.

Geeignete Polyester sind auch aliphatische Polyester wie z.B. Polyhydroxybutyrat (PHB) und sein Copolymer mit Polyhydroxyvalerat (PHV) Polyhydroxybutyrat-valerat (PHBV), Poly(e-Caprolacton) (PCL), SP 3/6, SP 4/6 (bestehend aus 1,3-Propandiol/Adipat bzw.1,4-Butandiol/Adipat), Polycaprolactam bzw. allgemein adipinsäurehaltige Polyester und die Ester anderer aliphatischer Carbonsäuren.

Die Folie gemäß der Erfindung kann weiterhin anorganische oder organische Partikel, die zur Einstellung der Oberflächentopographie oder Optik benötigt werden, enthalten. Solche Partikel sind z. B. Kalziumcarbonat, Apatit, Siliziumdioxid, Titandioxid, Aluminiumoxid, vernetztes Polystyrol, vernetztes Polymethylmethacrylat (PMMA), Zeolithe und andere Silikate wie Aluminiumsilikate. Diese Verbindungen werden im allgemeinen in Mengen von 0,05 bis 5 Gew.-%, vorzugsweise 0,1 bis 0,6 Gew.-%, (bezogen auf das Gewicht der Folie) eingesetzt.

Neben den erwähnten Additiven kann die Folie zusätzlich weitere Komponenten wie Flammschutzmittel und/oder Radikalfänger und/oder andere Polymere wie Polyetherimide enthalten.

Die erfindungsgemäße Folie enthält einen Hydrolysestabilisator (= Hydrolyseschutzmittel), wobei der Anteil des Hydrolysestabilisators bevorzugt im Bereich von 0,1 bis 20,0 Gew.-%, vorzugsweise von 1,0 bis 6,0 Gew.-% und besonders bevorzugt 1,5 - 4,5 Gew.-%, bezogen auf das Gewicht der Folie, liegt.

Geeignete Hydrolysestabilisatoren sind epoxidierte Fettsäurealkylester und/oder epoxidierte Fettsäureglyceride. Geeignete Hydrolysestabilisatoren sind Mischungen von Glycerinestern (Fettsäureglyceriden) oder reine Glycerinester, wobei die Glycerinester durch die folgende Formel beschrieben werden:

$$CH_2OR_1\text{-}CHOR_2\text{-}CH_2OR_3$$

wobei $R_1$ und $R_2$ und $R_3$ sowohl gleich als auch verschieden sein können. $R_1$, $R_2$ und $R_3$ folgen bevorzugt der folgenden Formel:

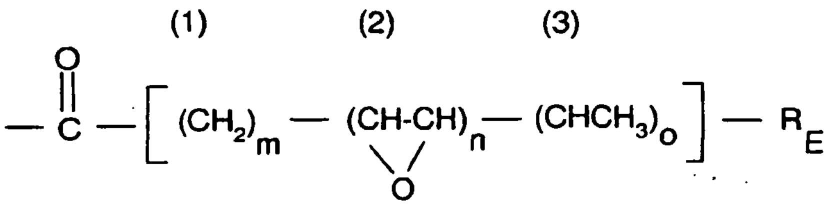

wobei $R_E$= $CH_3$ oder H und
m = 0 - 40, bevorzugt 7 - 20, besonders bevorzugt 10 - 16,
n = 1 - 10, bevorzugt 1 - 4, besonders bevorzugt 2 - 3 und
O = 0 - 4 bevorzugt 0 ist

Die Reihenfolge der einzelnen Methylen ($CH_2$)- (1), Epoxid (CHOCH)- (2) und ($CHCH_3$)- (3) Gruppen ist dabei beliebig, wobei bevorzugt mindestens 2 Methylengruppen (1) und besonders bevorzugt 7 Methylengruppen (1) auf die Carbonylgruppe folgen, bevor eine oder mehrere der Gruppen (2) oder (3) und wieder (1) folgen. Die Indizes geben somit nur die Gesamtzahl (nicht die Reihenfolge) der in den Resten $R_1$, $R_2$ und $R_3$ enthaltenen Gruppen (1), (2) oder (3) wieder.

Wobei in Glyzerinestermischungen Reste $R_{1,2,3}$ mit m = 0 zu weniger als 30 und bevorzugt zu weniger als 20 Gew.-% und besonders bevorzugt zu weniger als 10 Gew.-% enthalten sein sollten (bezogen auf das Gewicht der Estermischung).

Einer oder mehrere der Reste $R_1$ und $R_2$ und $R_3$ können dabei auch folgendermaßen aussehen:

R=H
R = ungesättigte (doppelbindungshaltige, nicht vollständig epoxidierte) Fettsäure

$R = (PO_2)\text{-}O\text{-}(CH_2)_2\text{-}N(CH_3)_3,$

wobei solche Glyzerinester weniger bevorzugt sind und Glyzerinester, die diese Reste enthalten in Glyzerinestermischungen bevorzugt zu weniger als 20 und besonders bevorzugt zu weniger als 5 Gew.-% enthalten sein sollten.

Da es sich bei den eingesetzten Glycerinestern oder Glycerinestermischungen bevorzugt um epoxidierte Öle biogenen Ursprungs handelt, enthalten diese neben den Glycerinestern meist noch geringe Mengen anderer Substanzen (Proteine usw.). Der Anteil dieser Substanzen liegt bevorzugt bei unter 10 Gew.-% und besonders bevorzugt bei unter 2 Gew.-%; bezogen auf das Gewicht des eingesetzten epoxidierten Öls.

Insbesondere der Anteil von Verbindungen mit einem Siedepunkt unter 210 °C liegt bevorzugt bei weniger als 5 und besonders bevorzugt bei weniger als 1 Gew.-%.

Die Säurezahl der eingesetzten Hydrolysestabilisatoren liegt bevorzugt bei unter 10 und besonders bevorzugt unter 2 mg KOH pro Gramm (DIN EN ISO 3682).

Für die Einarbeitung und für die Effektivität der Hydrolyseschutzwirkung hat es sich als günstig erwiesen, wenn die Viskosität der eingesetzten Stabilisatoren größer als 300 mPa· s bevorzugt größer als 500 mPa· s und besonders bevorzugt größer als 700 mPa· s bei 25 °C ist (DIN 53018).

Besonders geeignet sind solche Hydrolysestabilisatoren, die einen Epoxidsauerstoffgehalt von mindestens 0,5 Gew.-%, bevorzugt mindestens 1,5 und besonders bevorzugt von größer 2,0 Gew.-% aufweisen.

Geeignete epoxidierte Fettsäureglyceride bzw. deren Mischungen sind z. B. epoxidiertes Sojabohnenöl, epoxidiertes Leinöl, epoxidiertes Rüböl, epoxidiertes Sonnenblumenöl und epoxidiertes Fischöl bzw. sind in diesen epoxidierten Ölen enthalten (die Zusammensetzung der genannten Öle, insbesondere die Art und Menge der vorhandenen Fettsäuren, ist beispielsweise beschrieben in Römpp Chemie Lexikon, 10. Auflage, Georg Thieme Verlag, Stuttgart).

Als epoxidierte Fettsäurealkylester können grundsätzlich Ester von gesättigten, ungesättigten oder mehrfach ungesättigten Fettsäuren verwendet werden, die bevorzugt 1,5 - 15 Gew.-% Epoxidsauerstoff (bezogen auf den epoxidierten Ester) aufweisen. Dabei werden unter Alkyl geradkettige oder verzweigte Alkylreste mit bevorzugt 1 bis 20 C-Atomen verstanden. Bei den Fettsäuren handelt es sich bevorzugt um solche, die den bei den Fettsäureglyceriden genannten Definitionen $R_1$ - $R_3$ entsprechen.

Die erfindungsgemäßen Hydrolysestabilisatoren (epoxidierte Fettsäurealkylester und/oder epoxidierte Fettsäureglyceride) werden bevorzugt getrennt, d.h. entweder epoxidierte Fettsäurealkylester oder deren Mischungen oder epoxidierte Fettsäureglyceride oder deren Mischungen eingesetzt. Es ist jedoch auch möglich, Mischungen von Estern und Glyceriden zu verwenden. In jedem dieser Fälle ist es bevorzugt, die Hydrolysestabilisatoren in Form eines "dry liquid" einzusetzen, wie näher ausgeführt wird. Insbesondere bevorzugt ist dabei die Verwendung von epoxidierten Fettsäureglyceriden in Form von epoxidierten Ölen biogenen Ursprungs. Die erfindungsgemäßen Hydrolysestabilisatoren bzw. die sie enthaltenden Öle sind bekannt und kommerziell erhältlich (vgl. z. B. die Produkte der Ausführungsbeispiele).

Als epoxidierte Fettsäurealkylester werden bevorzugt die thermisch stabilen 2-Ethylhexylester ungesättigter Fettsäuren oder Fettsäuregemische der Rüböl, Leinöl, Sojaöl oder Fischöl zugrunde liegenden Fettsäuren eingesetzt, welche bevorzugt Epoxidgehalte von 1,5 - 15 Gew.-% Epoxidsauerstoff (bezogen auf die epoxidierten Fettsäurealkylester), vorzugsweise 4-8 Gew.-%, aufweisen.

Weiterhin hat es sich als günstig erwiesen, wenn der Folie, ein Stabilisator in Form eines Radikalfängers hinzugegeben wird, da dadurch dem Verlust an aktiven Oxirangruppen in der Extrusion durch radikalische Nebenreaktionen entgegengewirkt wird. Zweckmäßigerweise enthält die erfindungsgemäße Folie solche Stabilisatoren als Radikalfänger bzw. Thermostabilisatoren in Mengen von 50 bis 15.000 ppm, bevorzugt 100 bis 5.000 ppm, besonders bevorzugt 300 bis 1000 ppm, bezogen auf das Gewicht der Folie. Die dem Polyesterrohstoff zugegebenen Stabilisatoren werden beliebig ausgewählt z. B. aus der Gruppe der primären Stabilisatoren wie sterisch gehinderte Phenole oder sekundäre aromatische Amine oder der Gruppe der sekundären Stabilisatoren wie Thioether, Phosphite und Phosphonite sowie Zinkdibutyldithiocarbamat oder Mischungen aus primären und sekundären Stabilisatoren. Bevorzugt sind die phenolischen Stabilisatoren. Zu den phenolischen Stabilisatoren zählen insbesondere sterisch gehinderte Phenole, Thiobisphenole, Alkylidenbisphenole, Alkylphenole, Hydroxybenzyl-Verbindungen, Acylaminophenole und Hydroxyphenylpropionate (entsprechende Verbindungen sind beispielsweise beschrieben in "Kunststoffadditive", 2. Ausgabe, Gächter Müller, Carl Hanser-Verlag, und in "Plastics Additives Handbook", 5. Ausgabe, Dr. Hans Zweifel, Carl Hanser-Verlag). Besonders bevorzugt sind die Stabilisatoren mit folgenden CAS-Nummern: 6683-19-8, 36443-68-2, 35074-77-2, 65140-91-2, 23128-74-7, 41484-35-9, 2082-79-3 sowie ®Irganox 1222 der Firma Ciba Specialties, Basel, Schweiz, wobei in besonderen Ausführungsformen die Typen ®Irganox 1010, ®Irganox 1222, ®Irganox 1330 und ®Irganox 1425 oder Mischungen daraus eingesetzt werden.

Überraschenderweise hat es sich als günstiger erwiesen, wenn der Radikalfänger nicht dem Hydrolysestabilisator, sondern dem Polyesterrohstoff bereits bei der Polymerherstellung hinzugegeben wird.

Das Hydrolyseschutzmittel kann der Folie in Form eines Masterbatches zugegeben werden, hierzu wird ein Polyesterrohstoff in einem Extruder aufgeschmolzen, der Hydrolysestablisator in den Extruder dosiert, die Mischung

durch eine Lochdüse extrudiert, abgekühlt und anschließend granuliert. Der Gehalt an Hydrolysestabilisator im Masterbatch liegt üblicherweise zwischen 2 und 40 Gew.-%. Die Zugabe über ein Masterbatch ist eine weniger bevorzugte Methode, da der Hydrolysestabilisator hierbei zuerst bei der Herstellung des Masterbatches mit dem Polyester zusammen extrudiert wird und zur Folienherstellung erneut extrudiert werden muss. In beiden Extrusionsschritten verliert der Hydrolysestabilisator an Effektivität. Daher hat es sich als günstig erwiesen, den Hydrolysestabilisator direkt bei der Folienextrusion in den Extruder zu dosieren.

Dies kann sowohl in Form des reinen Hydrolysestabilisators, als auch bevorzugt in Form eines "dry liquid" erfolgen. Dry liquid heißt, dass die überwiegende Menge des Stabilisators (mindestens 50 %) bevorzugt mehr als 75 % von einem Trägermaterial aufgesaugt worden ist. Geeignete Trägermaterialien sind u.a. Silikate, bevorzugt synthetische Kieselsäure wie Sipernat 22LS (Degussa) oder Hi-Sil ABS (PPG Industries), Diatomeensilikate, Kalziumsilikate, Zeolithe, Aluminiumphosphate, polymere Molekularsiebe oder Kohlenstoffmolekularsiebe. Die mittlere Korngröße $d_{50}$ der Partikel liegt dabei bevorzugt unter 300 $\mu$m, insbesondere unter 150 $\mu$m und besonders bevorzugt unter 50 $\mu$m. Die Ölabsorption (DBP, nach DIN 53601) ist größer als 20 g/100 g bevorzugt größer als 100 g /100 g und besonders bevorzugt größer als 200 g/100 g jeweils bezogen auf die trockene Substanz. Das Trägermaterial wird mittels eines Rührwerkes in das Hydrolyseschutzmittel eingebracht.

Das Hydrolyseschutzmittel [d.h. hier Trägermaterial mit aufgesaugtem Hydrolyseschutzmittel (= dry liquid)] und evtl. daneben noch vorliegendes freies Hydrolyseschutzmittel wird bevorzugt direkt in den/die Extruder bei der Folienherstellung eingebracht. Mit Trägermaterial werden im Gegensatz zu der Dosierung von Hydrolyseschutzmittel ohne Trägermaterial auch bei der Einbringung in Einschneckenextruder und bei der Dosierung direkt in den Extrudereinzug gute Hydrolyseschutzergebnisse erzielt. Das Hydrolyseschutzmittel (auf Trägermaterial) kann auch über die Masterbatchtechnologie eingebracht werden. D.h. das Hydrolyseschutzmittel (mit Trägermaterial) wird in einem Extruder (bevorzugt ein Mehrschneckenextruder) in ein erfindungsgemäßes Polymer eingebracht. Dieses Polymer wird dann bei der Folienherstellung pur oder mit anderen erfindungsgemäßen Polymeren gemischt und erneut extrudiert. Dieses Verfahren ist jedoch weniger bevorzugt, da bereits im ersten Extrusionsschritt Hydrolyseschutzmittel verbraucht (abreagiert) wird, welches dann in der Folie nicht mehr als aktive Substanz zur Verfügung steht. Bei der Verwendung eines "dry liquid" enthält die Folie neben dem Hydrolyseschutzmittel bevorzugt mindestens 0,1 insbesondere mindestens 0,5 und besonders bevorzugt mindestens 1 Gew.-% Trägermaterial.

Die Folie gemäß der Erfindung wird im Allgemeinen nach an sich bekannten Extrusionsverfahren hergestellt und ist mehrschichtig, insbesondere mindestens zweischichtig, bevorzugt dreischichtig, wobei der Hydrolysestabilisator in mindestens einer Außenschicht nicht enthalten ist. In einer besonders bevorzugten Ausführungsform weist die Folie in beiden Außenschichten keinen Hydrolysestabilisator auf.

Die Deckschicht bzw. die Deckschichten welche keinen Hydrolysestabilisator enthalten, werden bevorzugt so dünn wie möglich ausgeführt. D.h. diese Schichten sind bevorzugt jeweils dünner als 5 $\mu$m, und besonders bevorzugt dünner als 1 $\mu$m und idealerweise dünner als 0,6 $\mu$m. Es hat sich jedoch als günstig erwiesen, wenn die Schicht nicht dünner als 0,1 $\mu$m ist.

Die hydrolysestabilisatorfreien Schichten können prinzipiell die gleichen Polymere und Zusatzstoffe (mit Ausnahme der beschriebenen Hydrolysestabilisatoren) enthalten wie die Schicht/Schichten, welche den Hydrolysestabilisator enthält.

Es hat sich jedoch als günstig erwiesen, wenn der Polyesterrohstoff einen möglichst geringen Gehalt an Carboxylendgruppen aufweist. Solche Rohstoffe sind u.a. in EP-A- 0 738 749 beschrieben. In einer bevorzugten Ausführung ist der Carboxylgehalt ausgedrückt in mmolH+/kg Polymer kleiner 25 und besonders bevorzugt bei kleiner 15 mmolH+/kg Polymer. Solche Werte werden durch Feststoffkondensation erreicht. Hierzu wird der Polyesterrohstoff zuerst auf einen iv-Wert (intrinsic viscosity in Trichlorethan / Phenol wie in US 3432591 beschrieben) von 0,52 - 0,58 polykondensiert. Der Rohstoff wird dann kristallisiert (0,01 - 2 Stunden bei 150 - 170 °C), anschließend bei einem Druck kleiner 1 mbar für 1 - 5 Stunden bei 160 °C getrocknet. Die eigentliche Feststoffkondensation wird anschließend für 5 - 20 Stunden bei 210 - 230 ° C bei einem Druck < 1 mbar ausgeführt und abschließend in 1 - 4 Stunden unter getrocknetem Stickstoff abgekühlt. Die Zielviskosität liegt dabei zwischen einem iv von 0,61 und 0,72. Höhere iv-Werte wie z.B. in EP 0738749 beschrieben haben sich in der Praxis als eher ungünstig erwiesen, da die hohen Viskositäten im Extruder höhere Temperaturen bzw. höhere Scherraten benötigen und so die Hydrolyseneigung der Schmelze wächst. Die iv-Werte der Rohstoffe welche in der Schicht/Schichten mit Hydrolysestabilisator zum Einsatz kommen sollten ebenfalls bevorzugt bei 0,61 - 0,72 liegen. Insbesondere hat es sich als günstig erwiesen, wenn der Unterschied der iv-Werte der stabilisatorhaltigen Schicht (bei Schichten der Mittelwert) und der iv-Werte der Schicht ohne Hydrolysestabilisator (bei Schichten der Mittelwert) nicht größer als 0,1 und bevorzugt nicht größer als 0,03 ist.

Bei dem Verfahren zur Herstellung der erfindungsgemäßen Folien wird zweckmäßigerweise so vorgegangen, dass die entsprechenden Schmelzen durch eine Flachdüse extrudiert werden, die so erhaltene Folie zur Verfestigung auf einer oder mehreren Walzen (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird. Im Bereich der Extrusion hat es sich dabei als günstig erwiesen, wenn Temperaturen von 295 °C nicht überschritten werden.

Besonders günstig ist es, wenn der Bereich der Düse und speziell der Bereich der Düsenlippe und nahe daran nicht wärmer als 290 °C, bevorzugt nicht wärmer als 285 °C und besonders bevorzugt nicht wärmer als 275 °C ist.

Es hat sich als günstig erwiesen, wenn die Temperatur der Extruder, die dünne Deckschichten ohne Hydrolysestabilisator extrudieren mindestens 1 °C und bevorzugt 3 - 7 °C höher eingestellt ist, als die Temperatur der Extruder, die Hydrolysestabilisator enthaltende Schichten extrudieren.

Die biaxiale Verstreckung wird im Allgemeinen sequentiell durchgeführt. Dabei wird vorzugsweise erst in Längsrichtung (d. h. in Maschinenrichtung, = MD-Richtung) und anschließend in Querrichtung (d. h. senkrecht zur Maschinenrichtung, = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im Allgemeinen werden die Längs- und auch die Querstreckung bei $T_g$ + 10 °C bis Tg + 60 °C (Tg = Glastemperatur der Folie) durchgeführt. Das Längsstreckverhältnis liegt allgemein im Bereich von 2 : 1 bis 6 : 1, vorzugsweise 3 : 1 bis 4,5 : 1. Das Querstreckverhältnis liegt allgemein im Bereich von 2 : 1 bis 5 : 1, vorzugsweise 3 : 1 bis 4,5 : 1 und das der gegebenenfalls durchgeführten zweiten Längs- und Querstreckung liegt bevorzugt bei 1,1 : 1 bis 5 : 1.

Die erste Längsstreckung kann gegebenenfalls gleichzeitig mit der Querstreckung (Simultanstreckung) durchgeführt werden. Als besonders günstig hat es sich dabei erwiesen, wenn das Streckverhältnis in Längs- und Querrichtung jeweils größer als 3 ist.

Bei der nachfolgenden Thermofixierung wird die Folie etwa 0,1 bis 10 s lang bei einer Temperatur von ca. 150 bis 260 °C, vorzugsweise 200 bis 245 °C, gehalten. Anschließend an beziehungsweise beginnend mit der Thermofixierung wird die Folie zur Reduzierung der Schrumpfwerte bevorzugt um 0 bis 15 %, insbesondere um 1,5 bis 8 %, in Quer- und gegebenenfalls auch in Längsrichtung relaxiert, und die Folie wird dann in üblicher Weise abgekühlt und aufgewickelt. Zum Erreichen besonders niedriger Schrumpfwerte sind maximale Fixiertemperaturen zwischen 230 und 240 °C und Relaxationen über 5 % besonders vorteilhaft.

Eine auf diese Weise hergestellte Folie weist eine deutlich geringere Hydrolyseneigung sowohl bei Raumtemperatur als auch bei Temperaturen bis 210 °C auf als eine unmodifizierte Polyesterfolie. Die Stabilisierung ist dabei weitgehend unabhängig von der Foliendicke und der Temperatur in einem Messbereich von 25 bis 210 °C. So weist beispielsweise eine 50 μm dicke dreischichtige PET-Folie (DEG-Gehalt 1 %, Start-SV-Wert 750) mit zwei 0,7 μm dicken Deckschichten aus PET (Carboxylendgruppengehalt in mmolH+/kg = 11) und einer Basisschicht aus PET mit 2,5 Gew.-% eines Hydrolysestabilisators aus epoxidiertem Sojabohnenöl mit einem Epoxidsauerstoffgehalt von 8 Gew.-% (aufgezogen auf Hi-Sil ABS von PPG Industries) nach 96 h im Autoklaven bei Wasserdampfsättigung und 110 °C noch einen SV-Wert von über 600 auf und ist damit noch mechanisch stabil, während eine unstabilisierte Folie nach dieser Zeit bereits unter einen SV-Wert von 400 abgefallen ist und damit so gut wie keine Biegebruchfestigkeit mehr aufweist. Eine 50 μm dicke zweischichtige PET-Folie (DEG-Gehalt 1 %, Start-SV-Wert 750) mit einer 0,7 μm dicken Deckschicht aus PET (Carboxylendgruppengehalt in mmolH+/kg = 11) und einer Basisschicht aus PET mit mit 2,5 Gew.-% eines Hydrolysestabilisators aus epoxidiertem Sojabohnenöl mit einem Epoxidsauerstoffgehalt von 8 Gew.-% (aufgezogen auf Hi-Sil ABS von PPG Industries) weist nach 96 h im Autoklaven bei Wasserdampfsättigung und 110 °C noch einen SV-Wert von über 600 auf. Die stabilisierten Folien halten 200 % länger unter den genannten Bedingungen aus, bis sie die kritische Grenze von 400 SV-Einheiten erreichen. Denselben relativen Zeitgewinn findet man auch bei 80 °C und bei 170 °C.

Besonders überraschend war, dass sich trotz der guten Langzeithydrolysestabilisierung bei der Folienherstellung kein unerwünschter Viskositätsaufbau im Extruder zeigte und auch kein erhöhtes Gel- oder Stippenniveau beobachtet wurde. Überraschend war auch die deutliche Verbesserung der Hydrolyseschutzwirkung durch die Verwendung eines Trägermaterials. (Einsatz als dry liquid).

Gegenüber einer einschichtigen Folie mit derselben Dicke und Stabilisatorgehalt wurde mit der oben genannten zweischichtigen Folie eine deutliche Reduktion des bei der Produktion durch den Hydrolysestabilisator unter Umständen auftretenden Bratfettgeruchs beobachtet. Mit der oben genannten Dreischichtfolie konnte der Geruch nahezu vollständig eliminiert werden.

Die Zweischichtfolie weist auf der Seite mit der unstabilisierten Deckschicht eine gute Metallisierbarkeit und Bedruckbarkeit auf. Auf der Seite mit dem Hydrolysestabilisator können Metallschicht und Druckfarben leichter abgewischt werden (abwischen mit einem trockenen Papiertuch). Die Dreischichtfolie war auf beiden Seiten gut metallisierbar und bedruckbar.

Folien, die mittels der genannten Hydrolysestabilistoren stabilisiert werden, eignen sich hervorragend zur Herstellung von Produkten, die Polyesterfolien enthalten und entweder für eine lange Lebensdauer (größer 1 Jahr) ausgelegt sind oder die während ihres Einsatzes mit höheren Temperaturen (größer 80 °C), insbesondere bei hoher Feuchte, konfrontiert werden, und für Außenanwendungen.

So eignen sie sich hervorragend zur Herstellung von Folienkondensatoren (bevorzugter Dickenbereich 0,4 -

12 µm). Diese können auf den bekannten konventionellen Wegen und Prozessabläufen (u. a. Metallisierung, Konfektionierung, Wickeln, Schopierung, Kontaktierung, Becherverguss usw.) hergestellt werden und weisen gegenüber den herkömmlichen Polyesterfolienkondensatoren eine deutlich erhöhte Lebensdauer auf und führen im Gegensatz zu schon beschriebenen Kondensatoren mit Carbodiimidstabilisatoren auch bei starkem Erhitzen nicht zur Emission von gesundheitsschädlichen Isocyanaten. Für die Herstellung von Kondensatoren hat es sich als günstig erwiesen, wenn die Folien einen Längsschrumpf von weniger als 4 % und einen Querschrumpf von weniger als 1 % bei 200 °C aufweisen, da sie sich dann besonders gut zur Herstellung von SMD-Kondensatoren eignen. Die erfindungsgemäßen Folien weisen bevorzugt solch niedrige Schrumpfwerte auf.

Eine weitere Anwendung sind z. B. Flachbandkabel in Automobilen. Hierzu werden Folien (bevorzugt 12 - 200 µm) mittels eines Heißsiegelklebers (z. B. EKP-Heißsiegellack 230 der Firma EKP Verpackungslacke GmbH (Deutschland)) mit Kupfer laminiert. Verbunde, die Polyester mit den erfindungsgemäßen Hydrolyseschutzmitteln enthalten, halten dabei den in Automobilen auftretenden mechanischen Belastungen (u. a. Vibrationen) weit länger Stand als Verbunde mit herkömmlichen Polyesterfolien. Hierbei ist jedoch darauf zu achten, dass auch die Kleber weitgehend hydrolyseunempfindlich sind (bei polyesterbasierten Klebern empfiehlt sich eine Ausrüstung mit den genannten Hydrolysestabilisatoren).

Eine weitere bevorzugte Anwendung ist das Rückseitenlaminat von Solarmodulen.

In den nachfolgenden Ausführungsbeispielen erfolgt die Messung der einzelnen Eigenschaften gemäß den angeführten Normen bzw. Verfahren.

## Messmethoden

DIN = Deutsches Institut für Normung

### Standardviskosität (SV)

Die Standardviskosität SV wird - angelehnt an DIN 53726 - durch die Messung der relativen Viskosität $\eta_{rel.}$ einer 1 Gew.-%igen Lösung in Dichloressigsäure (DCE) in einem Ubbelohde Viskosimeter bei 25 °C gemessen. Der SV-Wert ist wie folgt definiert:

$$SV = (\eta_{rel.} - 1) \cdot 1000$$

### Rauheit

Die Rauheit $R_a$ der Folie wird nach DIN 4768 bei einem Cut-off von 0,25 mm bestimmt.

### Schrumpf

Der thermische Schrumpf wird an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge $L_0$ wird für jede Maschinenrichtung TD und MD bestimmt, $L_{0\,TD}$ und $L_{0\,MD}$) und werden 15 min bei der angegeben Schrumpfungstemperatur (hier 200 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung

$$\text{Schrumpf [\%] MD} = 100 \cdot (L_{0\,MD} - L_{MD}) / L_{0\,MD}$$

$$\text{Schrumpf [\%] TD} = 100 \cdot (L_{0\,TD} - L_{TD}) / L_{0\,TD}$$

### Autoklavierung

Die Folien (10·2 cm) werden an einem Draht in den Autoklaven (Adolf Wolf SANOklav Typ: ST-MCS-204) gehängt und der Autoklav mit 2 l Wasser befüllt. Nach dem Schließen des Autoklaven wird dieser erhitzt. Bei 100°C

wird die Luft durch den Wasserdampf über das Ablassventil verdrängt. Dies wird nach ca. 5 min geschlossen, worauf die Temperatur auf 110 °C und der Druck auf 1,5 bar ansteigt. Nach der eingestellten Zeit wird der Autoklav automatisch abgeschaltet und nach Öffnen des Ablassventils die Folien entnommen. An diesen wird dann der SV-Wert bestimmt.

**Geruch**

Der Geruch wurde 6 Meter von der Düse entfernt (Richtung Längsreckung) subjektiv in drei Kategorien eingeteilt:

2 = Stark
1 = Wahrnehmbar
0 = Kein Geruch

5 Personen wurden befragt und die am häufigsten genannte Kategorie als Ergebnis genommen. Alle Personen waren mindestens einmal bei einer Produktion von Einschichtfolie mit Hydrolysestabilisator zugegen und kannten daher den Geruch.

**Beispiele**

<u>Hydrolysestabilisator 1 (Hystab1)</u>

2 Teile (Gewichtsanteile) epoxidiertes Sojabohnenöl (Merginat ESB von HOBUM Oleochemicals GmbH/ Deutschland) mit einem Epoxidsauerstoffgehalt von 8 Gew.-% werden mit einem Teil Hi-Sil ABS von PPG Industries USA gemischt.

<u>Hydrolysestabilisator 2 (Hystab2)</u>

Polybio Hystab 10 von Schäfer Additvsysteme GmbH. Natürlicher epoxidierter Fettsäureester.

| | |
|---|---|
| Rohstoff R1 | PET (Typ RT49, Invista Deutschland), SV-Wert 790 |
| Masterbatch MB1 | 1,0 Gew.-% Sylobloc 44H, 0,5 Gew.-% Aerosil TT600 und 98,2 Gew.-% PET; SV-Wert 790; DEG-Gehalt von 1 Gew.-% sowie 3000 ppm Irganox 1010 (Ciba; Zugabe Irganox während der Polyesterpolymerisation). |
| Rohstoff R2 | PET mit einem Carboxylgruppengehalt von 11 (Carboxylgruppengehalt in mmolH+/kg). Hierzu wurde PET mit einem iv von 0,58 nach dem Umesterungsverfahren hergestellt (Umesterungskatalysator Manganacetat 35 ppm Mn, Stabilisator Phosphorige Säure 70 ppm P, Polykondensationskatalysator Antimontrioxid, 200 ppm Sb). Der Rohstoff wurde dann kristallisiert (10 Minuten bei 160 °C im Wirbelschichttrockner), anschließend bei einem Druck von 0,7 mbar für 3 Stunden bei 160 °C getrocknet. Die Feststoffkondensation wurde anschließend für 10 Stunden bei 222 ° C bei einem Druck 0,31 mbar ausgeführt und abschließend in 2 Stunden unter getrocknetem Stickstoff abgekühlt. Der iv-Wert des Rohstoffs betrug 0,62 (SV = 810) |

<u>Folienherstellung:</u>

Thermoplast-Chips (MB1 sowie R1, R2) wurden gemäß den in den Beispielen angegebenen Verhältnissen gemischt und bei 280 °C (Deckschicht ohne Stabilisator 285 °C) in Zweischneckenextrudern (Japan Steel Works) extrudiert. Die Dosierung der Hydrolysestabilisatoren (Hystab 1 - 2) erfolgte bei Hystab1 über eine Rüttelrinne direkt in den Extrudereinzug. Hystab 2 wurde mittels einer Pumpe in die Schmelze nach der Entgasung dosiert. Das geschmolzene Polymer wurde aus einer Düse (Temperatur 274 °C) über eine Abzugswalze abgezogen. Die Dicke dieser Vorfolie betrug 533 μm. Der Film wurde um den Faktor 3,4 in Maschinenrichtung bei 116 °C gestreckt und in einem Rahmen bei 110 °C eine Querstreckung um den Faktor 3,1 durchgeführt. Anschließend wurde die Folie bei 231 °C thermofixiert und in Querrichtung um 6 % bei Temperaturen von 200 bis 180 °C relaxiert. Die Endfoliendicke betrug 50 μm.

Die Eigenschaften der hergestellten Folien sind der nachstehenden Tabelle zu entnehmen.

**Tabelle**

| | Einheit | Beispiel 1 | Beispiel 2 | Beispiel 3 | Beispiel 4 | Beispiel 5 | Vergleichsbeispiel |
|---|---|---|---|---|---|---|---|
| Schicht 1 (außen) | in Gew.-% | R1 =94,25 | R2 = 98 | R2 = 98 | R1 = 98 | R2 = 98 | R2 = 98 |
| | in Gew.-% | MB1 = 2 | MB1 = 2 | MB1 = 2 | MB1 = 2 | MB1 = 2 | MB1 = 2 |
| | in Gew.-% | Hystab1 = 3,75 | - | - | - | - | - |
| Schicht 2 (innen bei 3 Schichten; außen bei 2 Schichten) | in Gew.-% | R1 = 96,25 | R1 = 86,25 | R1 = 96,25 | R1 = 96,25 | R1 = 97,5 | R1 = 100 |
| | in Gew.% | Hystab1 = 3,75 | MB1 =10 | Hystab1 = 3,75 | Hystab1 = 3,75 | Hystab2 = 2,5 | |
| | in Gew.-% | - | Hystab1 = 3,75 | - | - | - | - |
| Schicht 3 (außen) | in Gew.-% | R1 = 94,25 | - | R2 = 98 | R1 = 98 | R2 = 98 | R2 = 98 |
| | in Gew.-% | MB1 = 2 | - | MB1 = 2 | MB1 = 2 | MB1 = 2 | MB1 = 2 |
| | in Gew.-% | Hystab1 = 3,75 | - | - | - | - | - |
| Foliendicke (Schichtdicke 1/2/3) | in μm | 50 (0,7/48,6/0,7) | 50 (0,7/49,3/-) | 50 (0,7/48,6/0,7) | 50 (0,7/48,6/0,7) | 50 (0,7/48,6/0,7) | 50 (0,7/48,6/0,7) |
| SV-Wert (nach Folienherstellung) | | 767 | 773 | 771 | 777 | 769 | 760 |
| SV Wert nach 96 h bei 110°C im Autoklav bei Wassersättigung | | 620 | 607 | 600 | 575 | 590 | 395 |
| Geruch | Kategorie | 2 | 1 | 0 | 0 | 0 | 0 |

**Patentansprüche**

1. Mehrschichtige Polyesterfolie enthaltend einen Hydrolysestabilisator, **dadurch gekennzeichnet, dass** der Hydrolysestabilisator ein epoxidierter Fettsäurealkylester oder eine Mischung von epoxidierten Fettsäurealkylestern und/oder ein epoxidiertes Fettsäureglycerid oder eine Mischung von epoxidierten Fettsäureglyceriden ist und mindestens eine Außenschicht der Folie den Hydrolysestabilisator nicht enthält.

2. Polyesterfolie nach Anspruch 1, **dadurch gekennzeichnet, dass** der Hydrolyse-stabilisator dem Polyester in Form eines dry liquid zugesetzt wird.

3. Polyesterfolie nach einem oder mehreren der Ansprüche 1 bis 2, **dadurch gekennzeichnet, dass** die Folie 0,1 bis 20 Gew.-% Hydrolysestabilisator enthält.

4. Polyesterfolie nach einem oder mehreren der Ansprüche 1 bis 3, **dadurch gekennzeichnet, dass** der Hydrolysestabilisator einen Epoxidsauerstoffgehalt von mindestens 0,5 Gew.-% aufweist.

5. Polyesterfolie nach einem oder mehreren der Ansprüche 1 bis 4, **dadurch gekennzeichnet, dass** als epoxidierte Fettsäureglyceride epoxidiertes Sojabohnenöl, epoxidiertes Leinöl, epoxidiertes Rüböl, epoxidiertes Sonnenblumenöl oder epoxidiertes Fischöl oder deren Mischungen eingesetzt werden.

6. Polyesterfolie nach einem oder mehreren der Ansprüche 1 bis 5, **dadurch gekennzeichnet, dass** als epoxidierte Fettsäurealkylester die 2-Ethylhexylester der ungesättigten Fettsäuren oder Fettsäurengemische aus Rüböl, Leinöl, Sojaöl oder Fischöl eingesetzt werden.

7. Polyesterfolie nach einem oder mehreren der Ansprüche 1 bis 6, **dadurch gekennzeichnet, dass** die epoxidierten Fettsäurealkylester einen Epoxidsauerstoffgehalt von 1,5 - 15 Gew.-% aufweisen.

8. Polyesterfolie nach einem oder mehreren der Ansprüche 1 bis 7, **dadurch gekennzeichnet, dass** sie einen Radikalfänger enthält.

9. Polyesterfolie nach einem oder mehreren der Ansprüche 1 bis 8, **dadurch gekennzeichnet, dass** die Folie mindestens 0,1 Gew.-% Trägermaterial aus dem Zusatz des Hydrolysestabilisators in Form eines dry liquid enthält.

10. Polyesterfolie nach einem oder mehreren der Ansprüche 1 bis 9, **dadurch gekennzeichnet, dass** das Trägermaterial ein Silikat, bevorzugt eine synthetische Kieselsäure ist.

11. Polyesterfolie nach einem oder mehreren der Ansprüche 1 bis 10, **dadurch gekennzeichnet, dass** die Folie als Polyester Polyethylenterephthalat, Polybutylenterephthalat, Polyethylennaphthalat oder Polytrimethylenterephthalat oder deren Mischungen oder deren Copolyester enthält.

12. Polyesterfolie nach einem oder mehreren der Ansprüche 1 bis 11, **dadurch gekennzeichnet, dass** die Folie zusätzlich anorganische oder organische Partikel enthält.

13. Polyesterfolie nach einem oder mehreren der Ansprüche 1 bis 12, **dadurch gekennzeichnet, dass** die Folie dreischichtig ist.

14. Polyesterfolie nach einem oder mehreren der Ansprüche 1 bis 13, **dadurch gekennzeichnet, dass** keine der Außenschichten der Folie den Hydrolysestabilisator enthält.

15. Verfahren zur Herstellung einer Polyesterfolie nach einem oder mehreren der Ansprüche 1 bis 14, umfassend die Schritte:

    a) Herstellen einer mehrschichtigen Folie enthaltend einen Hydrolysestabilisator, wobei der Hydrolysestabilisator ein epoxidierter Fettsäurealkylester oder eine Mischung von epoxidierten Fettsäurealkylestern und/oder ein epoxidiertes Fettsäureglycerid oder eine Mischung von epoxidierten Fettsäureglyceriden ist und mindestens eine Außenschicht der Folie den Hydrolysestabilisator nicht enthält durch Koextrusion,
    b) biaxiales Strecken der Folie und
    c) Thermofixieren der gestreckten Folie.

**16.** Verwendung einer Polyesterfolie nach einem oder mehreren der Ansprüche 1 bis 14 zur Herstellung von Folienkondensatoren, Flachbandkabeln oder Solarmodulen.

## Claims

**1.** A multilayer polyester film comprising a hydrolysis stabilizer, wherein the hydrolysis stabilizer is an epoxidized alkyl ester of fatty acid, or is a mixture of epoxidized alkyl esters of fatty acid and/or is an epoxidized fatty acid glyceride or is a mixture of epoxidized fatty acid glycerides, and at least one external layer of the film does not comprise the hydrolysis stabilizer.

**2.** The polyester film as claimed in claim 1, wherein the hydrolysis stabilizer is added to the polyester in the form of a dry liquid.

**3.** The polyester film as claimed in one or more of claims 1 to 2, which comprises from 0.1 to 20 % by weight of hydrolysis stabilizer.

**4.** The polyester film as claimed in one or more of claims 1 to 3, wherein the epoxide oxygen content of the hydrolysis stabilizer is at least 0.5 % by weight.

**5.** The polyester film as claimed in one or more of claims 1 to 4, wherein epoxidized fatty acid glycerides used comprise epoxidized soybean oil, epoxidized linseed oil, epoxidized rapeseed oil, epoxidized sunflower oil, or epoxidized fish oil, or a mixture of these.

**6.** The polyester film as claimed in one or more of claims 1 to 5, wherein the epoxidized alkyl esters of fatty acid used comprise the 2-ethylhexyl esters of the unsaturated fatty acids or fatty acid mixtures derived from rapeseed oil, linseed oil, soybean oil, or fish oil.

**7.** The polyester film as claimed in one or more of claims 1 to 6, wherein the epoxide oxygen content of the epoxidized alkyl esters of fatty acid is from 1.5 to 15 % by weight.

**8.** The polyester film as claimed in one or more of claims 1 to 7, which comprises a free-radical scavenger.

**9.** The polyester film as claimed in one or more of claims 1 to 8, which comprises at least 0.1 % by weight of carrier material derived from the addition of the hydrolysis stabilizer in the form of a dry liquid.

**10.** The polyester film as claimed in one or more of claims 1 to 9, wherein the carrier material is a silicate, preferably a synthetic silica.

**11.** The polyester film as claimed in one or more of claims 1 to 10, which comprises, as polyester, polyethylene terephthalate, polybutylene terephthalate, polyethylene naphthalate, or polytrimethylene terephthalate, or a mixture of these, or copolyesters of these.

**12.** The polyester film as claimed in one or more of claims 1 to 11, which also comprises inorganic or organic particles.

**13.** The polyester film as claimed in one or more of claims 1 to 12, which is a three-layer film.

**14.** The polyester film as claimed in one or more of claims 1 to 13, none of whose external layers comprises the hydrolysis stabilizer.

**15.** A process for the production of a polyester film as claimed in one or more of claims 1 to 14, ecompassing the steps of:

a) producing a multilayer polyester film comprising a hydrolysis stabilizer, wherein the hydrolysis stabilizer is an epoxidized alkyl ester of fatty acid, or is a mixture of epoxidized alkyl esters of fatty acid and/or is an epoxidized fatty acid glyceride or is a mixture of epoxidized fatty acid glycerides, and at least one external layer of the film does not comprise the hydrolysis stabilizer via coextrusion,
b) biaxial stretching of the film, and
c) heat-thermosetting of the stretched film.

**16.** The use of a polyester film as claimed in one or more of claims 1 to 14 for the production of film capacitors, of ribbon cables, or of solar modules.

## Revendications

**1.** Feuille de polyester multicouche contenant un stabilisateur d'hydrolyse, **caractérisée en ce que** le stabilisateur d'hydrolyse est un ester alkylique d'acide gras époxydé ou un mélange d'esters alkyliques d'acides gras époxydés et/ou un glycéride d'acide gras époxydé ou un mélange de glycérides d'acides gras époxydés et **en ce qu'**au moins une couche externe de la feuille ne contient pas le stabilisateur d'hydrolyse.

**2.** Feuille de polyester selon la revendication 1, **caractérisée en ce que** le stabilisateur d'hydrolyse est ajouté au polyester sous la forme d'un liquide anhydre.

**3.** Feuille de polyester selon une ou plusieurs des revendications 1 à 2, **caractérisée en ce que** la feuille contient 0,1 à 20 % en poids de stabilisateur d'hydrolyse.

**4.** Feuille de polyester selon une ou plusieurs des revendications 1 à 3, **caractérisée en ce que** le stabilisateur d'hydrolyse présente une teneur en oxygène d'époxyde d'au moins 0,5 % en poids.

**5.** Feuille de polyester selon une ou plusieurs des revendications 1 à 4, **caractérisée en ce que** l'on utilise comme glycérides d'acides gras époxydés, de l'huile de fèves de soja époxydée, de l'huile de lin époxydée, de l'huile de navette époxydée, de l'huile de tournesol époxydée ou de l'huile de poisson époxydée ou leurs mélanges.

**6.** Feuille de polyester selon une ou plusieurs des revendications 1 à 5, **caractérisée en ce que** l'on utilise, comme ester alkylique d'acide gras époxydé, le 2-éthylhexylester des acides gras insaturés ou de mélanges d'acides gras tirés de l'huile de navette, de l'huile de lin, de l'huile de soja ou de l'huile de poisson.

**7.** Feuille de polyester selon une ou plusieurs des revendications 1 à 6, **caractérisé en ce que** les esters alkyliques d'acides gras époxydés présentent une teneur en oxygène d'époxyde de 1,5 à 15 % en poids.

**8.** Feuille de polyester selon une ou plusieurs des revendications 1 à 7, **caractérisée en ce qu'**elle contient un agent piégeur de radicaux.

**9.** Feuille de polyester selon une ou plusieurs des revendications 1 à 8, **caractérisée en ce que** la feuille contient au moins 0,1 % en poids de matériau de support provenant de l'addition du stabilisateur d'hydrolyse sous forme de liquide anhydre.

**10.** Feuille de polyester selon une ou plusieurs des revendications 1 à 9, **caractérisée en ce que** le matériau de support est un silicate, de préférence un acide silicique synthétique.

**11.** Feuille de polyester selon une ou plusieurs des revendications 1 à 10, **caractérisée en ce que** la feuille contient comme polyester du poly(téréphtalate d'éthylène), du poly(téréphtalate de butylène), du poly(naphtalate d'éthylène) ou du poly(téréphtalate de triméthylène) ou leurs mélanges ou leurs copolyesters.

**12.** Feuille de polyester selon une ou plusieurs des revendications 1 à 11, **caractérisée en ce que** la feuille contient en outre des particules inorganiques ou organiques.

**13.** Feuille de polyester selon une ou plusieurs des revendications 1 à 12, **caractérisée en ce que** la feuille présente trois couches.

**14.** Feuille de polyester selon une ou plusieurs des revendications 1 à 13, **caractérisée en ce qu'**aucune des couches externes de la feuille ne contient le stabilisateur d'hydrolyse.

**15.** Procédé pour la fabrication d'une feuille de polyester selon une ou plusieurs des revendications 1 à 14, comprenant les étapes consistant à :

a) fabriquer par coextrusion une feuille multicouche contenant un stabilisateur d'hydrolyse, dans lequel le stabilisateur d'hydrolyse est un ester alkylique d'acide gras époxydé ou un mélange d'esters alkyliques d'acides gras époxydés et/ou un glycéride d'acide gras époxydé ou un mélange de glycérides d'acides gras époxydés et au moins une couche externe de la feuille ne contient pas le stabilisateur d'hydrolyse,

b) étirer la feuille biaxialement et

c) effectuer une thermofixation de la feuille étirée.

**16.** Utilisation d'une feuille de polyester selon une ou plusieurs des revendications 1 à 14 pour la fabrication de condensateurs à feuilles, de câbles en ruban plat ou de modules solaires.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5885709 A
- EP 0838500 A
- CH 621135 A
- EP 0292251 A
- US 3657191 A
- DE 10349168 A1
- EP 0738749 A
- US 3432591 A


### In der Beschreibung aufgeführte Nicht-Patentliteratur


- Römpp Chemie Lexikon. Georg Thieme Verlag
- **GÄCHTER MÜLLER.** Kunststoffadditive. Carl Hanser-Verlag
- **DR. HANS ZWEIFEL.** Plastics Additives Handbook. Carl Hanser-Verlag